# FASCICULE DE BREVET EUROPEEN

(11) **EP 1 077 309 B1**
(45) Date de publication et mention de la délivrance du brevet: **20.04.2005**
(21) Numéro de dépôt: 00402298.4
(22) Date de dépôt: 17.08.2000
(51) Int. Cl.: F01D 5/14

(54) **Aube de turbine à profil amélioré**
Turbinenschaufel mit verbessertem Profil
Turbine blade with improved section

(30) Priorité: 18.08.1999 FR 9910584
(43) Date de publication de la demande: 21.02.2001
(73) Titulaire: Snecma Moteurs, 75015 Paris (FR)
(72) Inventeur: Botrel, Erwan Daniel, 94140 Alfortville (FR); Brisset, Christophe Germain, 77590 Chartrettes (FR); Petot, Bertrand, 77590 Chartrettes (FR)

(56) Documents cités:
- US-A- 5 167 489
- US-A- 5 525 038

## Description

Le sujet de cette invention est une aube de turbine à profil amélioré.

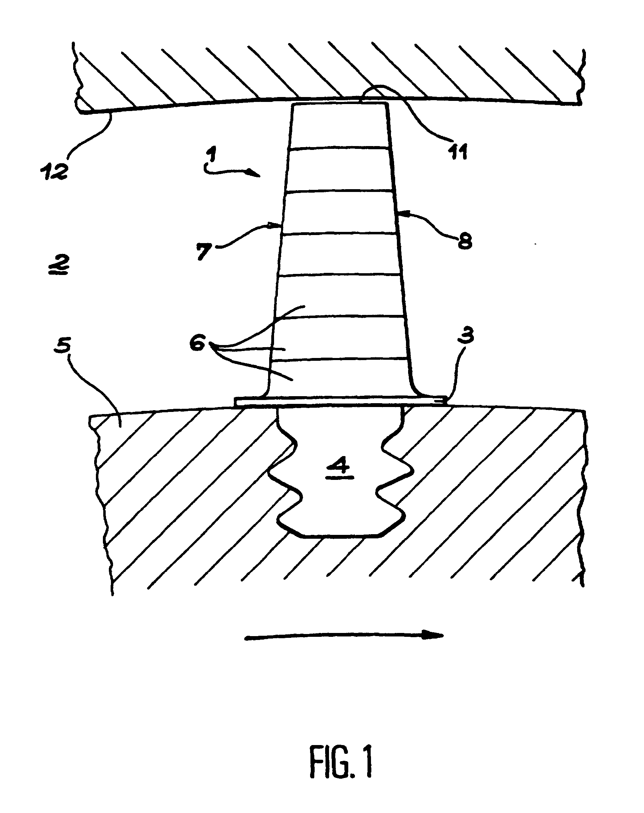

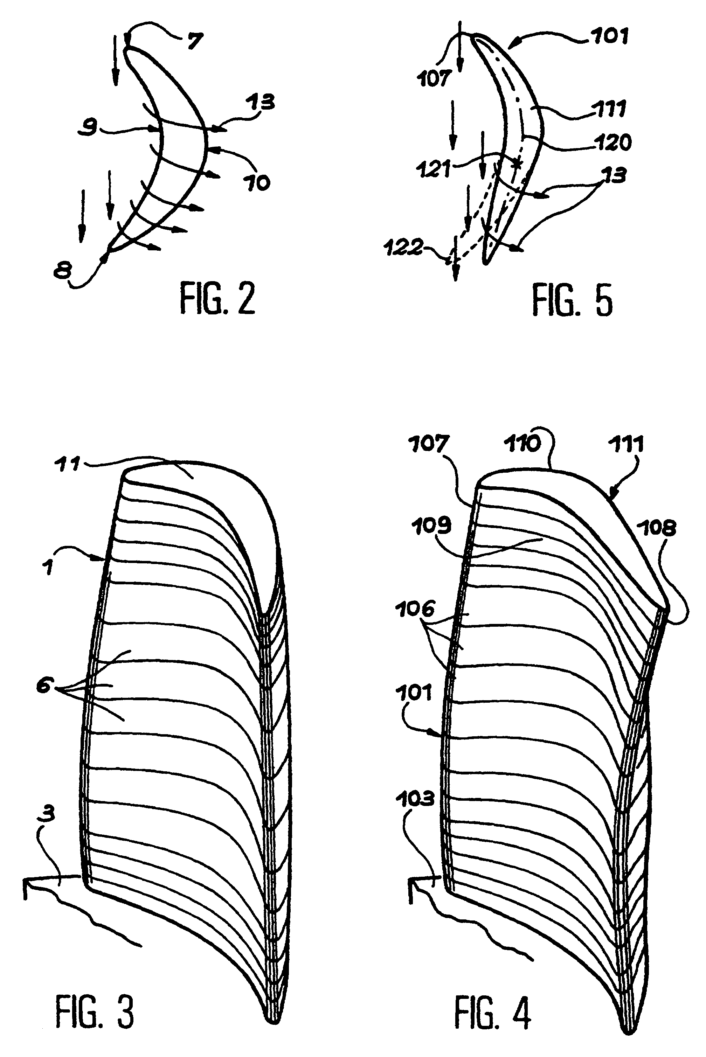

Une aube de turbine classique comprend, comme on le représente à la figure 1, une pale 1 mobile dans une veine annulaire 2, une plate-forme 3 délimitant la veine 2 à l'intérieur et un talon 4 engagé dans une rainure d'un moyeu 5 appartenant au rotor. La pale 1, qui est la partie essentielle de l'aube, peut être décomposée en sections 6 empilées, situées à des distances radiales croissantes de l'axe de rotation de la machine et qui s'étendent en s'incurvant entre un bord d'attaque 7 et un bord de fuite 8 de l'écoulement des gaz circulant dans la veine 2. Les surfaces de la pale 1 consistent en un intrados 9 et un extrados 10 qui s'étendent chacun entre les bords d'attaque et de fuite 7 et 8, comme on l'illustre à la figure 2. Les gaz de la machine soufflent sur l'intrados 9 et provoquent un mouvement de rotation du moyeu 5 et des aubes qui lui sont attachées, vers la droite sur les figures.

Il est usuel que le profil des pales 1 varie comme il est illustré sur la figure 3, les sections 6 étant plus longues et moins incurvées vers la plate-forme 3, ce qui est supposé donner un bon écoulement et une résistance mécanique satisfaisante.

La source de l'invention est toutefois le désir de réduire le courant de fuite entre la tête 11 de pale 1 et le carter 12 autour de la veine 2, entre lesquels un jeu doit subsister. Ces courants de fuite s'étendent de l'intrados 9 à l'extrados 10 selon les flèches 13 de la figure 2 ; ils produisent un tourbillon en aval de l'aube, qui perturbe l'écoulement des gaz.

La solution retenue consiste à déformer les sections 6 les plus proches de la tête 11 de l'aube pour réduire les courants de fuite à cet endroit. Quelques brevets mentionnent d'autres déformations auxquelles on peut soumettre cette partie de l'aube par rapport au profil typique de la figure 3 : c'est ainsi que la demande internationale WO 96 14494 décrit une aube dont la pale est incurvée vers l'extrados à proximité de la tête, ce qui donne un extrados surplombant. Cette disposition a pour but de refouler radialement les gaz soufflés sur l'extrados, vers l'axe de rotation, pour leur interdire d'atteindre la tête de pale et de passer de l'autre côté de l'aube, vers l'intrados, en traversant le jeu adjacent au carter 12. La pression à l'extrados devient plus forte près de la tête 11, ce qui réduit la différence de pression des deux côtés de la tête 11 et les fuites par-dessus elle de l'intrados à l'extrados. Si on se préoccupe encore ici de réduire ces courants de fuite, on le fait de façon différente et dans des conditions différentes aussi, en infléchissant ou favorisant l'écoulement à l'intrados de l'aube en direction tangentielle près de la tête 11, ce qui le détourne de la direction radiale où il fuirait.

Les mesures envisagées ici consistent à incurver le bord de fuite de façon que les sections de pale les plus proches de l'extrémité de tête soient de plus en plus ouvertes, c'est-à-dire dirigées dans la direction de l'écoulement près du bord de fuite et fassent donc moins dévier l'écoulement à cet endroit.

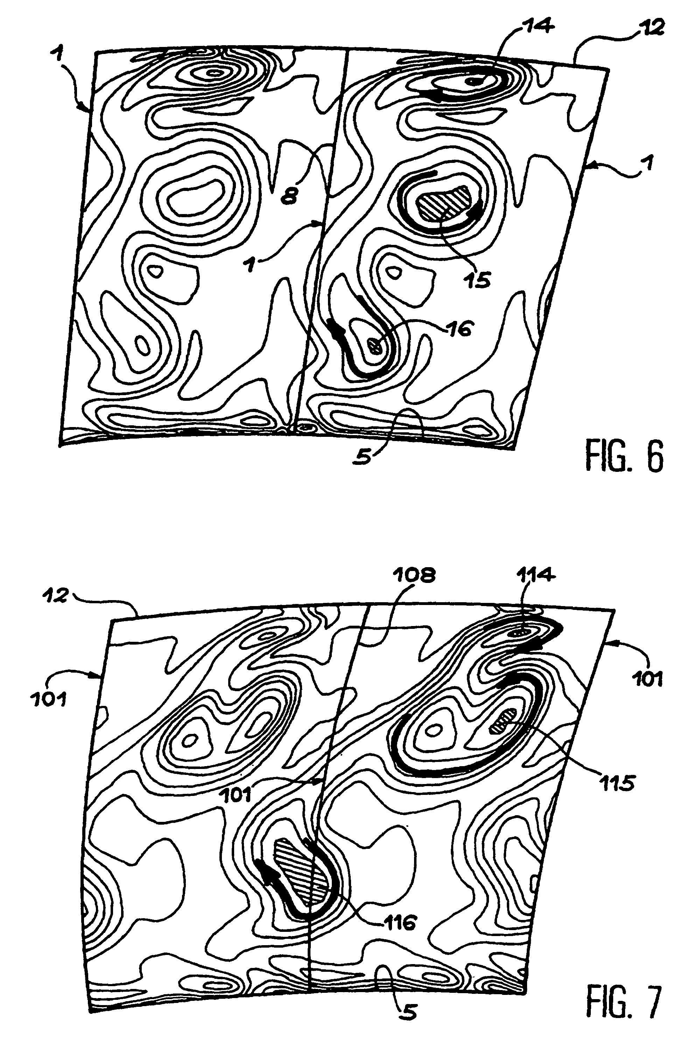

On décrira maintenant l'invention plus en détail à l'aide des figures suivantes :
■ Les figures 1, 2 et 3 déjà décrites sont diverses vues d'une aube typique ;
■ la figure 4 est une vue de l'aube conforme à l'invention ;
■ la figure 5, analogue à la figure 2, montre les conséquences de l'adoption de l'invention sur l'écoulement ;
■ et les figures 6 et 7 illustrent l'allure des pressions devant les aubes des figures 3 et 4 respectivement.

Les références des figures 1 à 3 augmentées de 100 servent à désigner des parties correspondantes de l'invention.

L'aube proposée comme invention et illustrée principalement à la figure 4 diffère de la précédente à proximité de la tête 111 : le bord de fuite 108 est incurvé vers l'extrados 110 à cet endroit, comme si on avait tordu le coin de la pale 1 vers l'extérieur, alors qu'il peut rester sensiblement rectiligne ou sensiblement rectiligne plus près de la plate-forme 103, comme dans la conception antérieure. Il s'ensuit que les sections 106 les plus proches de la tête 111 s'ouvrent d'avantage près du bord de fuite 108 que les autres sections 106, c'est-à-dire qu'elles font moins obstacle au libre écoulement des gaz devant l'aube, puisqu'elles sont moins incurvées que dans la solution antérieure et qu'elles ont un profil qui s'étend sensiblement dans la direction de l'écoulement près du bord de fuite 108.

La figure 5 montre que dans une telle situation le débit de gaz passant par-dessus la tête 11 et dévié vers l'extrados 110 selon les flèches 13 est plus petit, une portion plus importante de l'écoulement longeant l'aube jusqu'au bord de fuite 108. On peut envisager, afin de rétablir la surface globale de charge aérodynamique ou de portance de l'aube, d'incurver les sections 106 proches de la plate-forme 3 et médianes un peu plus que dans la conception classique, c'est-à-dire de les refermer.

Une définition plus rigoureuse de la forme de l'aube peut être celle-ci : le long d'une ligne médiane 120 de section d'aube, il existe un point 121, défini par une abscisse curviligne à compter du bord d'attaque 107, après lequel les sections d'aube ont une courbure de plus en plus faible, ou sont de plus en plus droites, ce qui se distingue de la conception de la demande WO 96 14494 où la déformation de l'aube n'affecte pas la forme des sections, qui reste la même, notamment près du bord de fuite. Une section d'aube éloignée de la tête 111 porte la référence 122.

Les figures 6 et 7 illustrent les tourbillons produits en aval des aubes : l'un d'eux, appelé le tourbillon de jeu, porte les références 14 et 114 pour les figures 6 et 7 respectivement, où les pales, respectivement 1 et 101, sont vues de l'arrière dans la direction de leur bord de fuite 8 et 108. On voit que le tourbillon 114 a une surface plus réduite que le tourbillon 14 ; la dépression qui y est produite est aussi d'intensité plus faible : l'écoulement des gaz devient plus régulier en aval de l'aube. Cela est dû à la réduction des fuites ; mais la façon dont les fuites sont amoindries avec l'invention a encore un effet original très favorable pour la régularité de l'écoulement et le rendement de la machine.

Le profil différent du bord de fuite 108 influe sur d'autres tourbillons, appelés tourbillons de passage, au nombre de deux et situés pour l'un (15 ou 115 respectivement) plus près du carter 12 et pour l'autre (16 ou 116 respectivement) près du moyeu 5. Le premier 15 ou 115 reste sensiblement situé au même endroit (non loin du tourbillon de jeu 4 ou 114), mais le tourbillon 116 plus proche du moyeu 5 est nettement déplacé par rapport au tourbillon 6, et est situé à peu près devant le bord de fuite 108 au lieu d'être du côté de l'extrados 110, comme c'est le cas de l'autre tourbillon 6. Il résulte de cela que les tourbillons de passage 115 et 116 sont plus éloignés que les tourbillons 15 et 16 de l'art antérieur et donc moins susceptibles de se renforcer réciproquement. Bien qu'ils occupent une superficie analogue à celle de la conception ordinaire, eux aussi sont moins puissants car la dépression qui y règne est moins forte.

On voit l'avantage qu'il y a à infléchir les courants de fuite vers la direction principale (axiale) de l'écoulement des gaz.

## Revendications

1. Aube de turbine, disposée dans une veine (2) d'écoulement de gaz, comportant une pale (101), un bord d'attaque (107), un bord de fuite (108) et une extrémité de tête (111), ladite pale (101) étant composée de sections (106) empilées, **caractérisée en ce que** les sections (106) de pale (101) les plus proches de l'extrémité de tête (111) ont un profil près du bord de fuite (108) qui s'étend sensiblement dans la direction principale de l'écoulement des gaz circulant dans la veine (2).

2. Aube de turbine selon la revendication 1, **caractérisé en ce que** les sections (106) de pale les plus proches de l'extrémité de tête (111) ont une courbure de plus en plus faible près du bord de fuite (108).

3. Aube de turbine selon l'une quelconque des revendications 1 ou 2, **caractérisé en ce que** les sections (106) les plus proches de l'extrémité (111) de tête sont moins incurvées.

4. Aube de turbine selon l'une quelconque des revendications 1 à 3, **caractérisée en ce qu'**elle comprend un profil de torsion vers l'extérieur à un coin du bord de fuite (108) et de l'extrémité de tête (111).

## Patentansprüche

1. Turbinenschaufel, die in einer Gasströmungsbahn (2) angeordnet ist, mit einem Schaufelblatt (101), einer Vorderkante (107), einer Hinterkante (108) und einem Kopfende (111), wobei dieses Schaufelblatt (101) sich aus aufeinander liegenden Sektoren (106) zusammensetzt,
**dadurch gekennzeichnet,**
**dass** die Sektoren (106) des Schaufelblatts (101), die dem Kopfende (111) am nächsten befindlich sind, ein Profil an der Hinterkante (108) aufweisen, das sich im Wesentlichen in der Hauptrichtung des in der Bahn (2) zirkulierenden Gasstroms erstreckt.

2. Turbinenschaufel nach Anspruch 1,
**dadurch gekennzeichnet,**
**dass** die Schaufelblattsektoren (106), die dem Kopfende (111) am nächsten befindlich sind, eine zur Hinterkante (108) hin immer schwächere Krümmung aufweisen.

3. Turbinenschaufel nach Anspruch 1 oder 2,
**dadurch gekennzeichnet,**
**dass** die Sektoren (106), die dem Kopfende (111) am nächsten befindlich sind, weniger stark gekrümmt sind.

4. Turbinenschaufel nach einem der Ansprüche 1 bis 3,
**dadurch gekennzeichnet,**
**dass** sie an einer Ecke der Hinterkante (108) und des Kopfendes (111) ein nach außen verdrehtes Profil aufweist.

## Claims

1. Turbine blade placed in a gas flow duct (2), comprising an aerofoil (101), a leading edge (107), a trailing edge (108) and a tip (111), said aerofoil (101) being composed of stacked sections (106), **characterized in that** the aerofoil (101) sections (106) closest to the tip (111) have a profile close to the trailing edge (108) that extends substantially along the main direction of flow of the gases flowing in the duct (2).

2. Turbine blade according to Claim 1, **characterized in that** the aerofoil sections (106) closest to the tip (111) have a progressively smaller curvature close to the trailing edge (108).

3. Turbine blade according to either of Claims 1 and 2, **characterized in that** the sections (106) closest to the tip (111) are less curved.

4. Turbine blade according to any one of Claims 1 to 3, **characterized in that** it includes a twist profile towards the outside at one corner of the trailing edge (108) and of the tip (111).
